# EUROPÄISCHE PATENTSCHRIFT

(11) **EP 3 365 089 B1**
(45) Veröffentlichungstag und Bekanntmachung des Hinweises auf die Patenterteilung: **06.03.2019**
(21) Anmeldenummer: 16785414.0
(22) Anmeldetag: 17.10.2016
(51) Int. Cl.: B01D 29/01, B01D 29/58, F01M 1/10, F01M 11/03

(54) **FILTERVORRICHTUNG FÜR EIN ÖLFILTER**
FILTER DEVICE FOR AN OIL FILTER
DISPOSITIF DE FILTRATION POUR FILTRE À HUILE

(30) Priorität: 20.10.2015 DE 102015220433
(43) Veröffentlichungstag der Anmeldung: 29.08.2018
(73) Patentinhaber: IBS Filtran Kunststoff-/Metallerzeugnisse GmbH, 51597 Morsbach (DE)
(72) Erfinder: DEDERING, Michael, 51597 Morsbach (DE)
(74) Vertreter: Richly & Ritschel Patentanwälte PartG mbB
(86) Internationale Anmeldenummer: PCT/EP2016/074882
(87) Internationale Veröffentlichungsnummer: WO 2017/067883

(56) Entgegenhaltungen:
- EP-A1- 2 133 130
- WO-A1-2013/083705
- DE-C- 683 132

## Beschreibung

Die vorliegende Erfindung betrifft eine Filtervorrichtung zur Filtration von Öl. Ferner betrifft die vorliegende Erfindung ein Saugfilter und ein Druckfilter mit einer entsprechenden Filtervorrichtung.

Aus dem Stand der Technik bekannte Filtervorrichtungen, die auch allgemein als Filtermedien bezeichnet werden, werden zur Filtration von Öl beispielsweise in einem Saugfilter für Kraftfahrzeuge, Lastkraftwagen und/oder Krafträdern verwendet.

Bei aus dem Stand der Technik bekannten Filtervorrichtungen bzw. Filtermedien besteht das Problem, dass bei der Verwendung effizienter Filtermedien insbesondere bei tiefen Temperaturen, beispielsweise bei einem Kaltstart, erhebliche Druckverluste vorliegen. Grund für diesen Nachteil ist die hohe Viskosität des Öls bei niedrigen Temperaturen. Tiefenfiltrationsmedien, die zwar einen akzeptablen Druckverlust bei hoher Schmutzaufnahmekapazität aufweisen, weisen hingegen keine hohe Filtrationseffizienz auf. Aus dem Stand der Technik bekannte Gewebe zu Filtrationszwecken weisen nur eine geringe Schmutzaufnahmekapazität auf und erreichen zudem keine hohe Effizienz. Speziell im Bereich der Saugfilter, bei denen maximal ein Unterdruck von 1 bar erzielbar ist, stehen die vorstehenden Probleme effizienten und langandauernden Filtrationsergebnissen entgegen.

Aus der EP 2 133 130 A1 ist ein Filtermedium für ein Ölfilter bekannt, bei dem zwischen einer ersten und einer zweiten Filtrationslage ein Rahmenelement angeordnet ist, so dass zwischen der ersten Filtrationslage und der zweiten Filtrationslage Zwischenkammern gebildet sind. Die erste Filtrationslage umfasst dabei ein offenes Filtermedium und die zweite Filtrationslage umfasst ein dichtes Filtermedium. Die zweite Filtrationslage besteht somit aus einem dichteren Filtermedium als die erste Filtrationslage. Das aus der EP 2 133 130 A1 bekannte Filtermedium weist einen geringeren Druckverlust bei niedrigen Strömungsgeschwindigkeiten und hohen Viskositäten des zu filtrierenden Öls auf.

Ferner weist das Filtermedium eine hohe Effizienz bei niedrigen Viskositäten ds zu filtrierenden Öls auf.

Nachteilig bei dem aus der EP 2 133 130 A1 bekannten Filtermedium hingegen ist, dass aufgrund der starren Ausbildung des Rahmenelements das Rahmenelement einer Geometrie eines Saugfilters, in das das Filtermedium einzubauen ist, angepasst werden muss. Denn das Rahmenelement ist aus einem starren Kunststoff gebildet, damit der Abstand zwischen der ersten Filtrationslage und der zweiten Filtrationslage stets gewährleistet bleibt. Somit müssen für unterschiedliche Saugfilter mit jeweils unterschiedlichem Aufbau und unterschiedlicher Geometrie eine Vielzahl von Rahmenelemente, erster und zweiter Filtrationslagen bevorratet werden. Ein weiterer Nachteil des aus der EP 2 133 130 A1 bekannten Filtermediums ist, dass in dem Kontaktbereich des Filtermediums mit der ersten Filtrationslage und der zweiten Filtrationslage sogenannte Totflächen gebildet sind, durch die kein Öl durch das Filtermedium hindurchtreten kann, da das Rahmenelement selber nicht öldurchlässig ausgebildet ist. Folglich wird die aktive Fläche, die bei der Filtration aktiv ist, sowohl der ersten Filtrationslage als auch der zweiten Filtrationslage durch die Aufstandsfläche des Rahmenelements auf der ersten Filtrationslage und der zweiten Filtrationslage reduziert.

Der vorliegenden Erfindung liegt somit die Aufgabe zugrunde, eine verbesserte Filtervorrichtung bereitzustellen, die bei gleichbleibend hoher oder gar verbesserter Filtrationsleistung eine erhöhte strukturelle Flexibilität und geringere Abmessungen aufweist.

Die der vorliegenden Erfindung zugrunde liegende Aufgabe wird durch eine Filtervorrichtung zur Filtration von Öl mit den Merkmalen des Anspruchs 1 gelöst. Vorteilhafte Ausgestaltungen der Filtervorrichtung sind in den abhängigen Ansprüchen beschrieben.

Im Genaueren wird die der vorliegenden Erfindung zugrunde liegende Aufgabe durch eine Filtervorrichtung zur Filtration von Öl gelöst, die eine erste Filtrationslage, eine zweite Filtrationslage und ein Rahmenelement umfasst, wobei das Rahmenelement sandwichartig zwischen der ersten Filtrationslage und der zweiten Filtrationslage angeordnet ist, und wobei das Rahmenelement eine Vielzahl von Durchgangsöffnungen aufweist, so dass zwischen der ersten Filtrationslage und der zweiten Filtrationslage eine der Vielzahl der Durchgangsöffnungen entsprechende Anzahl von Zwischenkammern gebildet ist. Die erfindungsgemäße Filtervorrichtung ist dadurch gekennzeichnet, dass das Rahmenelement ein öldurchlässiges Filtermedium umfasst, mittels dem eine Filtration des durch dieses hindurchtretenden Öls erfolgt.

Die erfindungsgemäße Filtervorrichtung, die auch als Filtermedium bezeichnet werden kann, bietet den Vorteil, dass diese aufgrund der flexiblen Ausgestaltung des Rahmenelements insgesamt eine erhöhte Flexibilität aufweist, so dass sich die Filtervorrichtung gegebenen geometrischen Beschaffenheiten eines Saugfilters, in das das Filtermedium beispielsweise eingebaut wird, anpassen kann. Darüber hinaus bietet die erfindungsgemäße Filtervorrichtung den Vorteil, dass die gesamte Fläche sowohl der ersten Filtrationslage als auch der zweiten Filtrationslage zur Filterung von Öl verwendet werden kann, da das Rahmenelement einem Hindurchtreten bzw. Hindurchströmen des Öls nicht entgegensteht. Folglich können die Querschnittsabmessungen der erfindungsgemäßen Filtervorrichtung verkleinert werden. Weiterhin bietet die erfindungsgemäße Filtervorrichtung den Vorteil, dass die gesamte Filtereffizienz erhöht wird, da das Rahmenelement selber als Filtrationslage dient, so dass pro Flächeneinheit der Filtervorrichtung ein erhöhtes Filtervolumen bereitgestellt wird, wodurch die Filtereffizienz der erfindungsgemäßen Filtervorrichtung erhöht wird.

Da der Differenzdruck in der zweiten Filtrationslage durch die volldurchströmte Filtervorrichtung und das poröse Rahmenelement auf die Ebene der ersten Filtrationslage durchgepflanzt wird, bietet die erfindungsgemäße Filtervorrichtung den Vorteil eines verminderten Differenzdrucks. Dadurch ergibt sich immer eine höhere Durchströmung an den Kontaktstellen des Rahmenelements als an dem Grenzbereich der Filtrationslage hin zu den Zwischenkammern. Dies ist ein grundsätzlicher Unterschied gegenüber Rahmenelementen aus einem soliden Material, wo die Strömung an den Kontaktstellen des Rahmenelements zu den porösen Filtermedien der ersten und zweiten Filtrationslage signifikant geringer ist. So kann bei der erfindungsgemäßen Filtervorrichtung beispielsweise trotz großer Einlassöffnungen in der ersten Filtrationslage eine erhöhte Strömung des zu filternden Öls durch das öldurchlässige Filtermedium des Rahmenelements realisiert werden.

Die erfindungsgemäße Filtervorrichtung ist insbesondere für Ölkreisläufe von Getrieben und Verbrennungskraftmaschinen ausgebildet. Das Rahmenelement kann auch als Abstandselement bezeichnet werden. Das öldurchlässige Filtermedium des Rahmenelements umfasst vorzugsweise ein Filtervlies. Weiter vorzugsweise besteht das Rahmenelement ausschließlich aus dem öldurchlässigen Filtermedium, vorzugsweise ausschließlich aus einem Filtervlies. Unter einer Durchgangsöffnung des Rahmenelements ist eine derartige Materialausnehmung des öldurchlässigen Filtermediums zu verstehen, dass im Bereich der Durchgangsöffnung kein Filtermedium/Filtermaterial zwischen der ersten Filtrationslage und der zweiten Filtrationslage angeordnet/vorhanden ist.

Vorzugsweise ist die Filtervorrichtung derart ausgebildet, dass die jeweiligen Zwischenkammern jeweils stirnseitig direkt durch die erste Filtrationslage und die zweite Filtrationslage und randseitig direkt durch eine seitliche Umrandung der Durchgangsöffnungen des Rahmenelements begrenzt sind.

Durch eine entsprechende Ausbildung der Filtervorrichtung ergibt sich eine erhöhte strukturelle Flexibilität der Filtervorrichtung, so dass sich diese verbessert den geometrischen Gegebenheiten eines Saugfilters anpassen kann, in das die Filtervorrichtung einzubauen ist.

Weiter vorzugsweise ist die Filtervorrichtung derart ausgebildet, dass eine Summe der Querschnittsflächen der Durchgangsöffnungen des Rahmenelements zumindest ein Zehntel der Gesamtfläche des Rahmenelements entspricht.

Weiter vorzugsweise beträgt die Summe der Querschnittflächen der Durchgangsöffnungen des Rahmenelements mehr als 1% der Gesamtfläche des Rahmenelements. Weiter vorzugsweise beträgt die Summe der Querschnittflächen der Durchgangsöffnungen des Rahmenelements mehr als 20% der Gesamtfläche des Rahmenelements. Weiter vorzugsweise beträgt die Summe der Querschnittflächen der Durchgangsöffnungen des Rahmenelements mehr als 30% der Gesamtfläche des Rahmenelements. Weiter vorzugsweise beträgt die Summe der Querschnittflächen der Durchgangsöffnungen des Rahmenelements mehr als 40% der Gesamtfläche des Rahmenelements. Weiter vorzugsweise beträgt die Summe der Querschnittflächen der Durchgangsöffnungen des Rahmenelements mehr als 50% der Gesamtfläche des Rahmenelements. Weiter vorzugsweise beträgt die Summe der Querschnittflächen der Durchgangsöffnungen des Rahmenelements mehr als 60% der Gesamtfläche des Rahmenelements. Weiter vorzugsweise beträgt die Summe der Querschnittflächen der Durchgangsöffnungen des Rahmenelements mehr als 70% der Gesamtfläche des Rahmenelements. Weiter vorzugsweise beträgt die Summe der Querschnittflächen der Durchgangsöffnungen des Rahmenelements mehr als 80% der Gesamtfläche des Rahmenelements. Weiter vorzugsweise beträgt die Summe der Querschnittflächen der Durchgangsöffnungen des Rahmenelements mehr als 90% der Gesamtfläche des Rahmenelements. Weiter vorzugsweise beträgt die Summe der Querschnittflächen der Durchgangsöffnungen des Rahmenelements mehr als 99% der Gesamtfläche des Rahmenelements.

Weiter vorzugsweise ist die Filtervorrichtung derart ausgebildet, dass die erste Filtrationslage eine Vielzahl von Einlassöffnungen aufweist, die jeweils in einer der Zwischenkammern der Filtervorrichtung münden.

Weiter vorzugsweise entspricht die Vielzahl der Einlassöffnungen der ersten Filtrationslage vorzugsweise der Vielzahl der Durchlassöffnungen des Rahmenelements. Folglich münden die Einlassöffnungen der ersten Filtrationslage in den Durchgangsöffnungen des Rahmenelements und somit in den Zwischenkammern. In Draufsicht auf die Filtervorrichtung sind die jeweiligen Einlassöffnungen der ersten Filtrationslage durch die jeweiligen Durchlassöffnungen des Rahmenelements umschlossen. Vorzugsweise sind in Draufsicht auf die Filtervorrichtung die jeweiligen Einlassöffnungen der ersten Filtrationslage zumindest teilweise durch die jeweiligen Durchlassöffnungen des Rahmenelements umschlossen. Folglich können die Einlassöffnungen teilweise durch das öldurchlässige Filtermedium des Rahmenelements teilweise abgedeckt sein.

Durch eine entsprechende Ausbildung der Filtervorrichtung wird der Einsatz der Filtervorrichtung über einen weitreichenden Viskositätsbereich des zu filtrierenden Öls ermöglicht, da insbesondere im Falle hoher Viskositäten, wie es beispielsweise bei tiefen Temperaturen der Fall ist, dass Öl nicht vollständig durch die erste Filtrationslage hindurchtreten muss.

Weiter vorzugsweise ist die Filtervorrichtung derart ausgebildet, dass die jeweiligen Durchgangsöffnungen einen kreisrunden Querschnitt aufweisen.

Eine entsprechend ausgebildete Filtervorrichtung weist eine erhöhte Stabilität auf, wobei gleichzeitig gewährleistet bleibt, dass ein Abstand zwischen der ersten Filtrationslage und der zweiten Filtrationslage zuverlässig durch das entsprechend ausgebildete Rahmenelement gewährleistet bleibt. Alternativ können die Durchgangsöffnungen auch eine quadratische oder rechteckige oder sechseckige oder achteckige oder eine beliebige polygonale Querschnittsform aufweisen. Beschränkungen hinsichtlich der geometrischen Ausgestaltung der Durchgangsöffnungen des Rahmenelements bestehen insofern nicht.

Weiter vorzugsweise ist die Filtervorrichtung derart ausgebildet, dass die erste Filtrationslage ein Feinfiltermedium und die zweite Filtrationslage ein Grobfiltermedium umfasst.

Das Grobfiltermedium weist eine erste mittlere Porengröße und das Feinfiltermedium weist eine zweite mittlere Porengröße auf, wobei die erste mittlere Porengröße größer ist als die zweite mittlere Porengröße. Unter einem Grobfiltermedium ist hinsichtlich eines Feinfiltermediums ein Filtermedium zu verstehen, dass größere mittlere Porengrößen aufweist, so dass das Grobfiltermedium zum Filtern von Partikeln ausgebildet ist, die einen größeren Durchmesser aufweisen als Partikel, die von dem Feinfiltermedium ausgefiltert werden. Anders ausgedrückt können mittels des Feinfiltermediums Partikel gefiltert werden, die einen kleineren Durchmesser / eine kleinere Ausdehnung aufweisen als Partikel, die mittels des Grobfiltermediums ausgefiltert werden können.

Weiter vorzugsweise ist die Filtervorrichtung derart ausgebildet, dass das Rahmenelement ausschließlich aus dem öldurchlässigen Filtermedium besteht. Eine entsprechend ausgebildete Filtervorrichtung weist einen erheblich vereinfachten Aufbau und folglich erheblich reduzierte Produktionskosten auf. Darüber hinaus ist eine entsprechend ausgebildete Filtervorrichtung besonders flexibel und kann sich geometrischen Gegebenheiten eines Saugfilters, in das die Filtervorrichtung einzubauen ist, besonders gut anpassen.

Weiter vorzugsweise ist die Filtervorrichtung derart ausgebildet, dass das öldurchlässige Filtermedium des Rahmenelements eine mittlere Porengröße aufweist, die größer oder gleich einer mittleren Porengröße eines Filtermediums der ersten Filtrationslage ist, und/oder dass das öldurchlässige Filtermedium des Rahmenelements eine größere Permeabilität als das Filtermedium der ersten Filtrationslage aufweist.

Weiter vorzugsweise ist die Filtervorrichtung derart ausgebildet, dass das öldurchlässige Filtermedium des Rahmenelements eine mittlere Porengröße aufweist, die kleiner oder gleich einer mittleren Porengröße eines Filtermediums der ersten Filtrationslage ist, und/oder dass das öldurchlässige Filtermedium des Rahmenelements eine geringere Permeabilität als das Filtermedium der ersten Filtrationslage aufweist.

Weiter vorzugsweise ist die Filtervorrichtung derart ausgebildet, dass das öldurchlässige Filtermedium des Rahmenelements eine mittlere Porengröße aufweist, die größer oder gleich einer mittleren Porengröße eines Filtermediums der zweiten Filtrationslage ist, und/oder dass das öldurchlässige Filtermedium des Rahmenelements eine größere Permeabilität als das Filtermedium der zweiten Filtrationslage aufweist.

Weiter vorzugsweise ist die Filtervorrichtung derart ausgebildet, dass das öldurchlässige Filtermedium des Rahmenelements eine mittlere Porengröße aufweist, die kleiner oder gleich einer mittleren Porengröße eines Filtermediums der zweiten Filtrationslage ist, und/oder dass das öldurchlässige Filtermedium des Rahmenelements eine geringere Permeabilität als das Filtermedium der zweiten Filtrationslage aufweist.

Weiter vorzugsweise ist die Filtervorrichtung derart ausgebildet, dass das öldurchlässige Filtermedium des Rahmenelements eine mittlere Porengröße aufweist, die kleiner oder gleich der mittleren Porengröße eines Filtermediums der zweiten Filtrationslage und größer oder gleich der mittleren Porengröße eines Filtermediums der ersten Filtrationslage ist.

Die erfindungsgemäße Filtervorrichtung ist derart zu verstehen, das sowohl die erste Filtrationslage als auch die zweite Filtrationslage mehr als ein flächiges Filtermedium umfassen können, so dass die Filtrationseigenschaften der Filtervorrichtung an unterschiedliche Einsatzzwecke angepasst werden kann. Beispielsweise kann die erste Filtrationslage zwei, drei oder mehr flächige Filtrationsmedien umfassen. Ferner kann die zweite Filtrationslage beispielsweise zwei, drei oder mehr flächige Filtrationsmedien umfassen.

Ferner ist die vorliegende Erfindung derart zu verstehen, dass die erste Filtrationslage als gefaltete Filtrationslage ausgebildet sein kann, so dass die erste Filtrationslage dann im Querschnitt eine Zick-Zack-Form oder eine gewellte Form aufweist. Ferner kann die erste Filtrationslage auch dann mehrere, z.B. zwei, vier oder mehr als vier jeweils gefaltete Filtermedien umfassen. Ferner kann die zweite Filtrationslage als gefaltete Filtrationslage ausgebildet sein kann, so dass die zweite Filtrationslage dann im Querschnitt eine Zick-Zack-Form oder eine gewellte Form aufweist. Ferner kann die zweite Filtrationslage auch dann mehrere, z.B. zwei, vier oder mehr als vier jeweils gefaltete Filtermedien umfassen. Ferner kann das Rahmenelement als gefaltetes Rahmenelement ausgebildet sein kann, so dass das Rahmenelement dann im Querschnitt eine Zick-Zack-Form oder eine gewellte Form aufweist. Ferner kann das Rahmenelement auch dann mehrere, z.B. zwei, vier oder mehr als vier jeweils gefaltete öldurchlässige Filtermedien umfassen.

Weitere Vorteile, Einzelheiten und Merkmale der Erfindung ergeben sich nachfolgend aus dem erläuterten Ausführungsbeispiel. Dabei zeigen im Einzelnen:
- Figur 1:: eine Draufsicht auf die erfindungsgemäße Filtervorrichtung ohne die zweite Filtrationslage; und
- Figur 2:: eine schematische Schnittdarstellung der in Figur 1 dargestellten Filtervorrichtung entlang der Schnittebene A-A mit der zweiten Filtrationslage.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

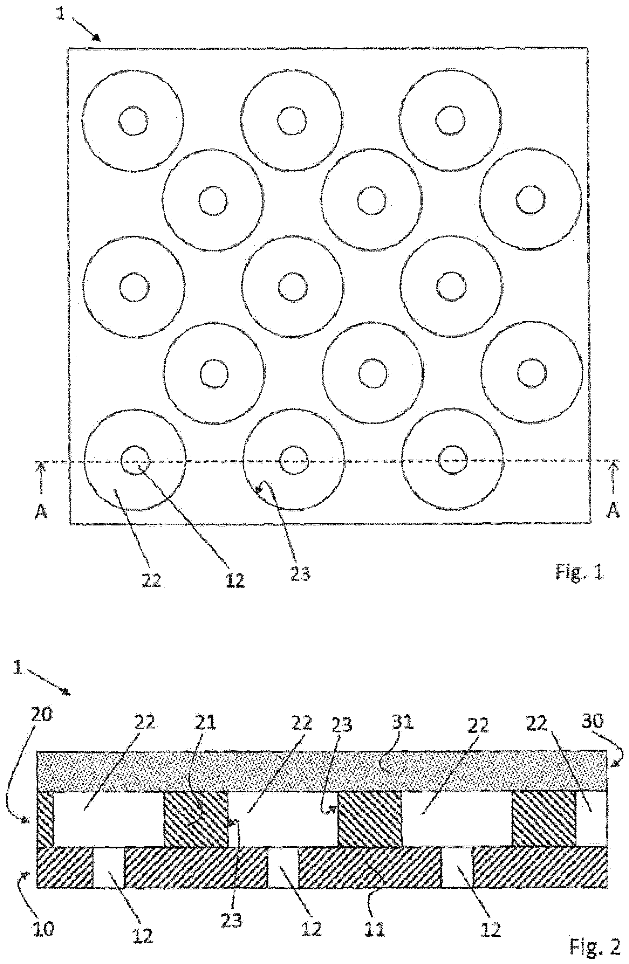

Figur 1 zeigt eine Draufsicht auf eine erfindungsgemäße Filtervorrichtung 1, die auch als Filtermedium 1 bezeichnet werden kann, und Figur 2 zeigt eine schematische Schnittdarstellung der in Figur 1 dargestellten Filtervorrichtung 1 entlang der Schnittebene A-A. Dabei ist zu beachten, dass in Figur 1 eine zweite Filtrationslage 30 nicht dargestellt ist, so dass aus Figur 1 lediglich eine Draufsicht auf ein Rahmenelement 20 und eine darunterliegende erste Filtrationslage 10 der Filtervorrichtung 1ersichtlich ist, wohingegen aus Figur 2 auch die auf dem Rahmenelement 20 angeordnete zweite Filtrationslage 30 ersichtlich ist.

Wie bereits erwähnt, umfasst die erfindungsgemäße Filtervorrichtung 1 zur Filtration von Öl die erste Filtrationslage 10, das auf der ersten Filtrationslage 10 angeordnete Rahmenelement 20 und die auf dem Rahmenelement 20 angeordnete zweite Filtrationslage 30. Folglich ist das Rahmenelement 20 sandwichartig zwischen der ersten Filtrationslage 10 und der zweiten Filtrationslage 30 angeordnet. Das Rahmenelement 20 umfasst ein öldurchlässiges Filtermedium 21, mittels dem eine Filtration des durch das öldurchlässige Filtermedium 21 hindurchtretenden Öls erfolgt. Das Rahmenelement 20 kann auch als Abstandselement 20 bezeichnet werden.

Aus den Figuren 1 und 2 ist ersichtlich, dass das Rahmenelement 20 eine Vielzahl von Durchgangsöffnungen 22 aufweist, so dass zwischen der ersten Filtrationslage 10 und der zweiten Filtrationslage 30 eine der Anzahl der Durchgangsöffnungen 22 entsprechende Anzahl von Zwischenkammern 22 gebildet ist. Dabei sind die jeweiligen Zwischenkammern 22 jeweils stirnseitig direkt durch die erste Filtrationslage 10 und die zweite Filtrationslage 30 begrenzt. Randseitig sind die jeweiligen Zwischenkammern 22 direkt durch eine seitliche Umrandung 23 der Durchgangsöffnungen 22 des Rahmenelements 20 begrenzt.

Bei dem dargestellten Ausführungsbeispiel beträgt die Summe der Querschnittsflächen der Durchgangsöffnungen 22 des Rahmenelements 20 und somit die Summe der Querschnittsflächen der Zwischenkammern 22 der Filtervorrichtung 1 in etwa 50% bis 60% der Gesamtfläche des Rahmenelements 20. Die vorliegende Erfindung ist aber auf einen entsprechenden Prozentanteil der Summe der Querschnittsflächen der Durchgangsöffnungen 22 zu der Gesamtfläche des Rahmenelements 20 nicht begrenzt.

Aus den Figuren ist ferner ersichtlich, dass die erste Filtrationslage 10 eine Vielzahl von Einlassöffnungen 12 aufweist, die jeweils in einer der Zwischenkammern 22 der Filtervorrichtung 1 münden. Bei Etablieren eines Unterdrucks in einem in den Figuren nicht dargestellten Saugfilter, in dem die Filtervorrichtung 1 eingebaut ist, tritt Öl über die Einlassöffnungen 12 in die Zwischenkammern 22 der Filtervorrichtung 1. Aufgrund des Unterdrucks wird das Öl aus den Zwischenkammern 22 durch ein Filtermedium 31 der zweiten Filtrationslage 30 gesaugt. Das Öl tritt selbstverständlich auch über ein Filtermedium 11 der ersten Filtrationslage 10 sowohl in die Zwischenkammern 22 als auch in ein öldurchlässiges Filtermedium 21 des Rahmenelements 20 ein, woraufhin das Öl aufgrund des bestehenden Unterdrucks von den Zwischenkammern 22 und dem öldurchlässigen Filtermedium 21 durch das Filtermedium 31, das als Feinfiltermedium 31 ausgebildet sein kann, hindurchgesaugt wird.

Das Filtermedium 11 der ersten Filtrationslage 10 kann beispielsweise als Grobfiltermedium 11 ausgebildet sein. Das Filtermedium 31 der zweiten Filtrationslage 30 kann beispielsweise als Feinfiltermedium 31 ausgebildet sein, so dass eine mittlere Porengröße des Feinfiltermediums 31 kleiner ist als eine mittlere Porengröße des Grobfiltermediums 11. Das öldurchlässige Filtermedium 21, aus dem das Rahmenelement 20 gebildet ist, kann eine mittlere Porengröße aufweisen, die kleiner ist als die mittlere Porengröße des Grobfiltermediums 11 und größer als eine mittlere Porengröße des Feinfiltermediums 31 ist. Weiterhin ist es auch möglich, dass eine mittlere Porengröße des öldurchlässigen Filtermediums 21 des Rahmenelements 20 größer oder gleich einer mittleren Porengröße des Grobfiltermediums 11 der ersten Filtrationslage 10 ist. Ferner ist es auch möglich, dass eine mittlere Porengröße des öldurchlässigen Filtermediums 21 des Rahmenelements 20 kleiner ist als eine mittlere Porengröße des Feinfiltermediums 31 der zweiten Filtrationslage ist. Begrenzungen hinsichtlich der Größenverhältnisse der mittleren Porengröße des öldurchlässigen Filtermediums 21 zu den mittleren Porengrößen des Grobfiltermediums 11 und des Feinfiltermediums 31 bestehen insoweit nicht.

Aus Figur 1 ist ferner ersichtlich, dass die jeweiligen Durchgangsöffnungen 22 und somit die jeweiligen Zwischenkammern 22 einen kreisrunden Querschnitt aufweisen. Jedoch ist die vorliegende Erfindung auf eine entsprechende Querschnittsgeometrie der Zwischenkammern 22 nicht beschränkt. Die Zwischenkammern 22 können beispielsweise auch einen quadratischen, einen rechteckigen, einen sechseckigen, einen achteckigen oder einen beliebig polygonalen Querschnitt aufweisen. Beschränkungen hinsichtlich der Querschnittsform der Zwischenkammern 22 bestehen insoweit nicht.

### Bezugszeichenliste:

- 1: Filtervorrichtung / Filtermedium
- 10: erste Filtrationslage
- 11: Filtermedium / Grobfiltermedium (der ersten Filtrationslage)
- 12: Einlassöffnung (der ersten Filtrationslage)
- 20: Rahmenelement / Abstandselement
- 21: öldurchlässiges Filtermedium (des Rahmenelements)
- 22: Durchgangsöffnung / Zwischenkammer
- 23: seitliche Umrandung der Durchgangsöffnung
- 30: zweite Filtrationslage
- 31: Filtermedium / Feinfiltermedium (der zweiten Filtrationslage)

## Patentansprüche

1. Filtervorrichtung (1) zur Filtration von Öl, umfassend eine erste Filtrationslage (10), eine zweite Filtrationslage (30), und ein Rahmenelement (20), wobei
- das Rahmenelement (20) sandwichartig zwischen der ersten Filtrationslage (10) und der zweiten Filtrationslage (30) angeordnet ist, und wobei
- das Rahmenelement (20) eine Vielzahl von Durchgangsöffnungen (22) aufweist, so dass zwischen der ersten Filtrationslage (10) und der zweiten Filtrationslage (30) eine der Vielzahl der Durchgangsöffnungen (22) entsprechende Anzahl von Zwischenkammern (22) gebildet ist,
wobei die Filtervorrichtung (1) **dadurch gekennzeichnet ist, dass** das Rahmenelement (20)
- porös ausgebildet ist,
- selber als Filtrationslage dient,
- einem Hindurchströmen des Öls nicht entgegensteht, und
- ein öldurchlässiges Filtermedium (21) umfasst, mittels dem eine Filtration des durch dieses hindurchtretenden Öls erfolgt.

2. Filtervorrichtung (1) nach Anspruch 1, **dadurch gekennzeichnet, dass** die jeweiligen Zwischenkammern (22) jeweils stirnseitig direkt durch die erste Filtrationslage (10) und die zweite Filtrationslage (30) und randseitig direkt durch eine seitliche Umrandung (23) der Durchgangsöffnungen (22) des Rahmenelements (20) begrenzt sind.

3. Filtervorrichtung (1) nach einem der vorhergehenden Ansprüche, **dadurch gekennzeichnet, dass** eine Summe der Querschnittsflächen der Durchgangsöffnungen (22) des Rahmenelements (20) zumindest ein Zehntel der Gesamtfläche des Rahmenelements (20) entspricht.

4. Filtervorrichtung (1) nach einem der vorhergehenden Ansprüche, **dadurch gekennzeichnet, dass** die erste Filtrationslage (10) eine Vielzahl von Einlassöffnungen (12) aufweist, die jeweils in einer der Zwischenkammern (22) der Filtervorrichtung (1) münden.

5. Filtervorrichtung (1) nach einem der vorhergehenden Ansprüche, **dadurch gekennzeichnet, dass** die jeweiligen Durchgangsöffnungen (22) einen kreisrunden Querschnitt aufweisen.

6. Filtervorrichtung (1) nach einem der vorhergehenden Ansprüche, **dadurch gekennzeichnet, dass** die erste Filtrationslage (10) ein Feinfiltermedium (11) und die zweite Filtrationslage (30) ein Grobfiltermedium (31) umfasst.

7. Filtervorrichtung (1) nach einem der vorhergehenden Ansprüche, **dadurch gekennzeichnet, dass** das Rahmenelement (20) ausschließlich aus dem öldurchlässigen Filtermedium (21) besteht.

8. Filtervorrichtung (1) nach einem der vorhergehenden Ansprüche, **dadurch gekennzeichnet, dass** das öldurchlässige Filtermedium (21) des Rahmenelements (20) eine mittlere Porengröße aufweist, die größer oder gleich einer mittleren Porengröße eines Filtermediums (11) der ersten Filtrationslage (10) ist, und/oder dass das öldurchlässige Filtermedium (21) des Rahmenelements (20) eine größere Permeabilität als das Filtermedium (11) der ersten Filtrationslage (10) aufweist.

9. Filtervorrichtung (1) nach einem der vorhergehenden Ansprüche, **dadurch gekennzeichnet, dass** das öldurchlässige Filtermedium (21) des Rahmenelements (20) eine mittlere Porengröße aufweist, die kleiner oder gleich einer mittleren Porengröße eines Filtermediums (11) der ersten Filtrationslage (10) ist, und/oder dass das öldurchlässige Filtermedium (21) des Rahmenelements (20) eine geringere Permeabilität als das Filtermedium (11) der ersten Filtrationslage (10) aufweist.

10. Filtervorrichtung (1) nach einem der vorhergehenden Ansprüche, **dadurch gekennzeichnet, dass** das öldurchlässige Filtermedium (21) des Rahmenelements (20) eine mittlere Porengröße aufweist, die größer oder gleich einer mittleren Porengröße eines Filtermediums (31) der zweiten Filtrationslage (30) ist, und/oder dass das öldurchlässige Filtermedium (21) des Rahmenelements (20) eine größere Permeabilität als das Filtermedium (31) der zweiten Filtrationslage (30) aufweist.

11. Filtervorrichtung (1) nach einem der vorhergehenden Ansprüche, **dadurch gekennzeichnet, dass** das öldurchlässige Filtermedium (21) des Rahmenelements (20) eine mittlere Porengröße aufweist, die kleiner oder gleich einer mittleren Porengröße eines Filtermediums (31) der zweiten Filtrationslage (30) ist, und/oder dass das öldurchlässige Filtermedium (21) des Rahmenelements (20) eine geringere Permeabilität als das Filtermedium (31) der zweiten Filtrationslage (30) aufweist.

12. Filtervorrichtung (1) nach einem der vorhergehenden Ansprüche, **dadurch gekennzeichnet, dass** das öldurchlässige Filtermedium (21) des Rahmenelements (20) eine mittlere Porengröße aufweist, die kleiner oder gleich der mittleren Porengröße eines Filtermediums (31) der zweiten Filtrationslage (30) und größer oder gleich der mittleren Porengröße eines Filtermediums (11) der ersten Filtrationslage (10) ist.

13. Saugfilter mit einer Filtervorrichtung (1) nach einem der vorhergehenden Ansprüche.

14. Druckfilter mit einer Filtervorrichtung (1) nach einem der Ansprüche 1 bis 12.

## Claims

1. A filter device (1) for filtering oil, comprising a first filtration layer (10), a second filtration layer (30) and a frame element (20), wherein
- the frame element (20) is arranged in a sandwich-like manner between the first filtration layer (10) and the second filtration layer (30), and wherein
- the frame element (20) has a plurality of through-openings (22) so that a number of intermediate chambers (22) is formed between the first filtration layer (10) and the second filtration layer (30), wherein the number of intermediate chambers (22) corresponds to the number of through-openings (22),
wherein the filter device (1) **is characterized in that** the frame element (20)
- is constructed to be porous,
- itself acts as a filtration layer,
- does not inhibit throughflow of the oil and
- comprises an oil-permeable filter medium (21) by means of which a filtration of the oil which passes through it is carried out.

2. The filter device (1) as claimed in claim 1, **characterized in that** the respective intermediate chambers (22) are each delimited at the end face directly by the first filtration layer (10) and the second filtration layer (30) and at the edge side directly by a lateral edge (23) of the through-openings (22) of the frame element (20).

3. The filter device (1) as claimed in either of the preceding claims, **characterized in that** a total of the cross-sectional surface-areas of the through-openings (22) of the frame element (20) corresponds to at least a tenth of the total surface-area of the frame element (20).

4. The filter device (1) as claimed in one of the preceding claims, **characterized in that** the first filtration layer (10) has a large number of inlet openings (12) which each open in one of the intermediate chambers (22) of the filter device (1).

5. The filter device (1) as claimed in one of the preceding claims, **characterized in that** the respective through-openings (22) have a circular cross-section.

6. The filter device (1) as claimed in one of the preceding claims, **characterized in that** the first filtration layer (10) comprises a fine filter medium (11) and the second filtration layer (30) comprises a coarse filter medium (31).

7. The filter device (1) as claimed in one of the preceding claims, **characterized in that** the frame element (20) comprises exclusively the oil-permeable filter medium (21).

8. The filter device (1) as claimed in one of the preceding claims, **characterized in that** the oil-permeable filter medium (21) of the frame element (20) has a mean pore size which is greater than or equal to a mean pore size of a filter medium (11) of the first filtration layer (10), and/or **in that** the oil-permeable filter medium (21) of the frame element (20) has a greater permeability than the filter medium (11) of the first filtration layer (10).

9. The filter device (1) as claimed in one of the preceding claims, **characterized in that** the oil-permeable filter medium (21) of the frame element (20) has a mean pore size which is less than or equal to a mean pore size of a filter medium (11) of the first filtration layer (10) and/or **in that** the oil-permeable filter medium (21) of the frame element (20) has a lower permeability than the filter medium (11) of the first filtration layer (10).

10. The filter device (1) as claimed in one of the preceding claims, **characterized in that** the oil-permeable filter medium (21) of the frame element (20) has a mean pore size which is greater than or equal to a mean pore size of a filter medium (31) of the second filtration layer (30) and/or **in that** the oil-permeable filter medium (21) of the frame element (20) has a greater permeability than the filter medium (31) of the second filtration layer (30).

11. The filter device (1) as claimed in one of the preceding claims, **characterized in that** the oil-permeable filter medium (21) of the frame element (20) has a mean pore size which is less than or equal to a mean pore size of a filter medium (31) of the second filtration layer (30) and/or **in that** the oil-permeable filter medium (21) of the frame element (20) has a lower permeability than the filter medium (31) of the second filtration layer (30).

12. The filter device (1) as claimed in one of the preceding claims, **characterized in that** the oil-permeable filter medium (21) of the frame element (20) has a mean pore size which is less than or equal to the mean pore size of a filter medium (31) of the second filtration layer (30) and greater than or equal to the mean pore size of a filter medium (11) of the first filtration layer (10).

13. A suction filter having a filter device (1) as claimed in one of the preceding claims.

14. A pressure filter having a filter device (1) as claimed in one of claims 1 to 12.

## Revendications

1. Dispositif de filtre (1) pour la filtration d'huile, comprenant une première couche de filtration (10), une seconde couche de filtration (30), et un élément de cadre (20), dans lequel
- l'élément de cadre (20) est disposé à la manière d'un sandwich entre la première couche de filtration (10) et la seconde couche de filtration (30), et dans lequel
- l'élément de cadre (20) présente une multiplicité d'ouvertures de passage (22), de telle manière qu'un nombre de chambres intermédiaires (22) correspondant à la multiplicité d'ouvertures de passage (22) soit formé entre la première couche de filtration (10) et la seconde couche de filtration (30),
dans lequel le dispositif de filtre (1) est **caractérisé en ce que** l'élément de cadre (20)
- est réalisé sous forme poreuse,
- fait lui-même office de couche de filtration,
- ne s'oppose pas à une traversée de l'huile, et
- comprend un moyen de filtration (21) perméable à l'huile, au moyen duquel s'effectue une filtration de l'huile qui le traverse.

2. Dispositif de filtre (1) selon la revendication 1, **caractérisé en ce que** les chambres intermédiaires respectives (22) sont respectivement limitées côté frontal directement par la première couche de filtration (10) et la seconde couche de filtration (30) et en bordure directement par un encadrement latéral (23) des ouvertures de passage (22) de l'élément de cadre (20).

3. Dispositif de filtre (1) selon l'une quelconque des revendications précédentes, **caractérisé en ce qu'**une somme des aires de section transversale des ouvertures de passage (22) de l'élément de cadre (20) correspond au moins à un dixième de la surface totale de l'élément de cadre (20).

4. Dispositif de filtre (1) selon l'une quelconque des revendications précédentes, **caractérisé en ce que** la première couche de filtration (10) présente une multiplicité d'ouvertures d'entrée (12), qui débouchent respectivement dans une des chambres intermédiaires (22) du dispositif de filtre (1).

5. Dispositif de filtre (1) selon l'une quelconque des revendications précédentes, **caractérisé en ce que** les ouvertures de passage respectives (22) présentent une section transversale ronde.

6. Dispositif de filtre (1) selon l'une quelconque des revendications précédentes, **caractérisé en ce que** la première couche de filtration (10) comprend un moyen de filtration fine (11) et la seconde couche de filtration (30) comprend un moyen de filtration grossière (31).

7. Dispositif de filtre (1) selon l'une quelconque des revendications précédentes, **caractérisé en ce que** l'élément de cadre (20) se compose exclusivement du moyen de filtration perméable à l'huile (21).

8. Dispositif de filtre (1) selon l'une quelconque des revendications précédentes, **caractérisé en ce que** le moyen de filtration perméable à l'huile (21) de l'élément de cadre (20) présente une taille de pores moyenne, qui est supérieure ou égale à une taille de pores moyenne d'un moyen de filtration (11) de la première couche de filtration (10), et/ou **en ce que** le moyen de filtration perméable à l'huile (21) de l'élément de cadre (20) présente une perméabilité plus élevée que le moyen de filtration (11) de la première couche de filtration (10).

9. Dispositif de filtre (1) selon l'une quelconque des revendications précédentes, **caractérisé en ce que** le moyen de filtration perméable à l'huile (21) de l'élément de cadre (20) présente une taille de pores moyenne, qui est inférieure ou égale à une taille de pores moyenne d'un moyen de filtration (11) de la première couche de filtration (10), et/ou **en ce que** le moyen de filtration perméable à l'huile (21) de l'élément de cadre (20) présente une perméabilité moins élevée que le moyen de filtration (11) de la première couche de filtration (10).

10. Dispositif de filtre (1) selon l'une quelconque des revendications précédentes, **caractérisé en ce que** le moyen de filtration perméable à l'huile (21) de l'élément de cadre (20) présente une taille de pores moyenne, qui est supérieure ou égale à une taille de pores moyenne d'un moyen de filtration (31) de la seconde couche de filtration (30), et/ou **en ce que** le moyen de filtration perméable à l'huile (21) de l'élément de cadre (20) présente une perméabilité plus élevée que le moyen de filtration (31) de la seconde couche de filtration (30).

11. Dispositif de filtre (1) selon l'une quelconque des revendications précédentes, **caractérisé en ce que** le moyen de filtration perméable à l'huile (21) de l'élément de cadre (20) présente une taille de pores moyenne, qui est inférieure ou égale à une taille de pores moyenne d'un moyen de filtration (31) de la seconde couche de filtration (30), et/ou **en ce que** le moyen de filtration perméable à l'huile (21) de l'élément de cadre (20) présente une perméabilité moins élevée que le moyen de filtration (31) de la première couche de filtration (30).

12. Dispositif de filtre (1) selon l'une quelconque des revendications précédentes, **caractérisé en ce que** le moyen de filtration perméable à l'huile (21) de l'élément de cadre (20) présente une taille de pores moyenne, qui est inférieure ou égale à la taille de pores moyenne d'un moyen de filtration (31) de la seconde couche de filtration (30) et supérieure ou égale à la taille de pores moyenne d'un moyen de filtration (11) de la première couche de filtration (10).

13. Filtre aspirant avec un dispositif de filtre (1) selon l'une quelconque des revendications précédentes.

14. Filtre à pression avec un dispositif de filtre (1) selon l'une quelconque des revendications 1 à 12.
